# EUROPÄISCHE PATENTSCHRIFT

(11) **EP 2 874 265 B1**
(45) Veröffentlichungstag und Bekanntmachung des Hinweises auf die Patenterteilung: **19.07.2017**
(21) Anmeldenummer: 13192631.3
(22) Anmeldetag: 13.11.2013
(51) Int. Cl.: H02J 3/38, H02J 13/00

(54) **Verfahren und System zum Überwachen und Steuern einer Stromverteilung in einem Energieverteilungsnetz**
Method and system for monitoring and controlling a current distribution in an energy distribution network
Procédé et système de surveillance et de commande d'une distribution de courant dans un réseau de distribution d'énergie

(43) Veröffentlichungstag der Anmeldung: 20.05.2015
(73) Patentinhaber: Siemens Aktiengesellschaft, 80333 München (DE)
(72) Erfinder: Kussyk, Jaroslaw, 1170 Wien (AT); Schenk, Alexander, 2700 WR. Neustadt (AT)
(74) Vertreter: Maier, Daniel Oliver

(56) Entgegenhaltungen:
- EP-A2- 1 912 304
- WO-A1-2009/106129
- WO-A2-2012/139655
- WO-A2-2012/139657
- DE-A1-102005 056 084
- US-A1- 2013 270 908
- US-B1- 6 219 591

## Beschreibung

### Technisches Gebiet

Die vorliegende Erfindung betrifft allgemein das Gebiet der Energieverteilungsnetze und der Energieversorgung. Im Speziellen bezieht sich die vorliegende Erfindung auf ein Verfahren zur Überwachung und Steuerung einer Stromverteilung in einem Energieverteilungsnetz, insbesondere im Niederspannungsbereich, bei dezentraler Energieeinspeisung und dezentralem Energieverbrauch. Die Erfindung bezieht sich weiterhin auf ein System zur Durchführung des erfindungsgemäßen Verfahrens. Das Energieverteilungsnetz besteht dabei aus mehreren Netzabschnitten, an welche die Netzteilnehmer - d.h. Verbraucher wie z.B. private Haushalte, etc. und zumindest in eine Netzabschnitt eine Energieerzeugungsvorrichtung (z.B. privater Energieerzeuger, etc.) angeschlossen sind.

### Stand der Technik

Bei einer herkömmlichen zentralen Energieversorgung werden dezentral angeordnete Verbraucher wie z.B. Industrieanlagen, Wohngebäuden, privaten Haushalten, etc. als Netzteilnehmer über Energieversorgungsnetze in der Regel zentral versorgt. Ein Energieversorgungsnetz ist dabei üblicherweise ein Netzwerk von elektrischen Leitungen, in welchem physikalische Vorgänge durch die so genannten Kirchhoff'schen Regeln beschrieben werden können. Durch das Energieversorgungsnetz wird bei einer zentralen Energieversorgung elektrische Energie bzw. elektrischer Strom von Energieerzeugern wie z.B. leistungsfähigen Kraftwerken (Wasserkraftwerke, kalorische Kraftwerke, etc.) zu den Energie verbrauchenden Netzteilnehmern bzw. Verbrauchern wie z.B. Haushalten, Geräten in Industrieunternehmen, etc. transportiert und verteilt. Für diesen Transport von Energie bzw. elektrischem Strom wird ein Energieversorgungsnetz üblicherweise in drei Versorgungsebenen mit verschiedenen, festgelegten Spannungsbereichen unterteilt. Das Energieversorgungsnetz umfasst damit in der Regel eine Hochspannungsebene oder Hochspannungsnetz, eine Mittelspannungsebene oder Mittelspannungsnetz und für eine Feinverteilung der Energie bzw. des Stroms an die verbrauchenden Netzteilnehmer oder Verbraucher eine Niederspannungsebene bzw. Niederspannungsnetze, Energieverteilungsnetze oder Verteilnetze.

Ein Energieverteilungsnetz bzw. Niederspannungsnetz wird dabei üblicherweise regional über Transformatorstationen aus einem übergeordneten Mittelspannungsnetz gespeist. D.h. die Energie für die Versorgung der verbrauchenden Netzteilnehmer bzw. Verbraucher wird durch die Transformatorstationen von der Mittelspannungsebene auf den Spannungsbereich der Niederspannungsebene transformiert und dann über das Energieverteilungsnetz bzw. Verteilnetz an die verbrauchenden Netzteilnehmer bzw. Verbraucher (z.B. private Haushalte, kleine Industriebetriebe, etc.) verteilt. Das Energieverteilungsnetz besteht dazu aus mehreren Netzabschnitten oder Netzsträngen, an welche die Netzteilnehmer bzw. Verbraucher angeschlossen sind.

Durch einen Übergang von einer herkömmlichen zentralen Energieversorgung mit zentraler Energie- bzw. Stromerzeugung in leistungsfähigen Kraftwerken mit hoher Verfügbarkeit zu einer Energieversorgung mit (teilweise) dezentraler Energie-/Stromerzeugung, insbesondere auf Basis erneuerbarer Energien wie z.B. mit Photovolaik-, Windkraft- oder Biogasanlagen, kleine Kraft-Wärme-Kopplungsanlagen, etc., kommt es zu einer zunehmenden Dezentralisierung der Energieversorgung. Von Energieerzeugungsvorrichtungen wie beispielsweise Photovolaikanlagen oder kleine Kraft-Wärme-Kopplungsanlagen, etc., welche als energieerzeugende Netzteilnehmer an das Energieverteilungs- bzw. Niederspannungsnetz angebunden sind, wird nun Energie bzw. elektrischer Strom in das Energieverteilungsnetz bzw. Niederspannungsnetz eingespeist. Damit kommt es zu einer Veränderung in der Art der Nutzung der Energieverteilungsnetze bzw. Verteilnetze im Niederspannungsbereich. Eine Energie- bzw. Stromverteilung erfolgt im Energieverteilungsnetz nun nicht mehr zentral von einer oder mehreren Transformatorstationen zu den Netzteilnehmern bzw. Verbraucher, sondern in einer zumindest zeitweise dezentralen Form - d.h. von einem (energieerzeugenden) Netzteilnehmer bzw. einer Energieerzeugungsvorrichtung zu einem (verbrauchenden) Netzteilnehmer oder sogar von mehreren Energieerzeugungsvorrichtungen in Richtung Transformatorstation bzw. ins Mittelspannungsnetz.

Weiterhin soll es künftig auch möglich sein, überschüssige Energie beispielsweise bei einzelnen Netzteilnehmern - z.B. in Batterie für Elektroautos, etc. - zu speichern und bei Bedarf wieder ins Energieverteilungsnetz zurückzuspeisen. Eine derartige Speicherung in einer Speichereinheit (z.B. Elektroauto-Batterie, etc.) stellt dann beispielsweise eine neu hinzukommende Netzlast im Energieverteilungsnetz bzw. im jeweiligen Netzabschnitt des Energieverteilungsnetzes dar, an welchen diese Speichereinheit angeschlossen ist. Durch diese zusätzliche Netzlast kann es z.B. zu Leitungskapazitätsengpässen in einem Netzabschnitt eines Energieverteilungsnetzes bzw. im Energieverteilungsnetz kommen.

Insbesondere durch die dezentrale Einspeisung von elektrischen Strom mittels Energieerzeugungsvorrichtungen (z.B. Photovolaikanlagen, etc.) kann es in Netzabschnitten bzw. Netzsträngen des Energieverteilungsnetzes mit mehreren Netzteilnehmer (Verbrauchern und zumindest einer Energieerzeugungsvorrichtung) zu einer dauerhaften Überschreitung einer Strombelastungsgrenze kommen. Netzabschnitte sind üblicherweise nur an ihren jeweiligen Endpunkten abgesichert. Durch zumindest eine Energieerzeugungsvorrichtung in einem Netzabschnitt kommt zu einem geplanten Stromfluss durch diesen Netzabschnitt beispielsweise noch ein Stromfluss von der zumindest einen Energieerzeugungsvorrichtung - ein so genannter Querstrom - additiv dazu, welcher zu der Stromüberlastung führen kann. Dieser Stromfluss bzw. Querstrom kann allerdings durch z.B. eine vergleichende Strommessung am Beginn und am Ende des jeweiligen Netzabschnitts nicht bestimmt werden, wodurch in diesem Netzabschnitt eine Überlastung und gegebenenfalls Schäden z.B. an den Leitungen entstehen können.

Um eine dauerhafte Strombelastung innerhalb einzelner Netzabschnitte zu vermeiden, ist daher eine laufende Überwachung und gegebenenfalls eine Regelung der Stromverteilung und eventuell der Netzspannung bzw. der Netzspannungsqualität in den Netzabschnitten - insbesondere in Netzabschnitten mit angebundenen Energieerzeugungsvorrichtungen - notwendig. Anhand der Überwachung der Stromverteilung kann gegebenenfalls eine Reduktion der Strombelastung und/oder eine Lastreduktion vorgenommen werden.

Bei bisherigen Ansätzen für eine Steuerung einer dezentralen Energieerzeugung und/oder für eine dezentrale Energiespeicherung durch Netzteilnehmer (z.B. Energieerzeugungsvorrichtungen, Speichereinheiten) im Energieverteilungsnetz werden beispielsweise Sensoren für eine Strommessung in allen Abzweigen bzw. bei allen oder vielen Netzteilnehmeranschlüssen, insbesondere von dezentralen Energieerzeugern, und sofern möglich entlang eines zu überwachenden Netzabschnitts positioniert. Mit Hilfe dieser Vielzahl an Messsensoren werden dann z.B. die Summe aller in den Netzabschnitt hinein- sowie aus dem Netzabschnitt herausfließenden Ströme sowie die Querströme entlang der Leitung des Netzabschnitts ermittelt und überwacht. Dabei ist es aber notwendig, eine relativ große Anzahl in einem zu überwachenden Netzabschnitt des Energieversorgungsnetzes zu installieren. Weiterhin bedarf es einer detaillierten Kenntnis der aktuellen Netztopologie sowie der aktuellen Position der Messsensoren, um weitere Messsensoren für eine entsprechende Überwachung der Stromverteilung in einem Netzabschnitt durchzuführen. Allerdings ist oft eine genaue und aktuelle Netztopologie - vor allem innerhalb der zu überwachenden Netzabschnitte - nicht im notwendigen Detaillierungsgrad verfügbar und eine Installation und Auswertung von Messsensoren in allen Abzweigen bzw. bei allen Netzteilnehmern eines Netzabschnitt mit großem Aufwand und hohen Kosten verbunden. Weiterhin ist beispielsweise eine Positionierung von Messsensoren entlang von Netzabschnitten, welche zumindest teilweise als unterirdisch verlegte Kabel ausgeführt sind, oft nicht möglich bzw. nur mit sehr großem Aufwand und Kosten realisierbar.

Dokument WO 2012/139655 A1 zu Beispiel offenbart ein Verfahren und ein System zur Erkennung und zur örtlichen Eingrenzung von unbekannter Stromentnahmen bzw. -einspeisungen. Dabei werden als last- und quellenfrei angenommene Netzabschnitte überwacht.

Dokument WO 2012/139657 A2 offenbart ein Verfahren zur Überwachung des Stromnetzes auf Überlasten, wobei alle gemessenen Ströme summiert werden.

### Darstellung der Erfindung

Der Erfindung liegt daher die Aufgabe zugrunde, ein Verfahren zum Überwachen und Steuern einer Stromverteilung in einem Energieverteilungsnetz bzw. in Netzabschnitten eines Energieversorgungsnetzes bei dezentraler Energieeinspeisung bzw. auch bei dezentraler Energiespeicherung sowie ein zugehöriges System anzugeben, durch welche auf einfache Weise und ohne hohen Aufwand eine Strombelastung in Netzabschnitten eines Energieverteilungsnetzes zentral koordiniert und flexibel geregelt wird.

Diese Aufgabe wird durch ein Verfahren sowie durch eine Schaltanordnung der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem in einem Netzabschnitt mit zumindest einer Energieerzeugungsvorrichtung wie z.B. einer Photovoltaikanlage, etc. zumindest drei Vorrichtungen zum Erfassen von Strommesswerten installierte werden. Von diesen Vorrichtungen zum Erfassen von Strommesswerten werden dann an mindestens einer dezentralen Stromeinspeisestelle und an mindestens zwei Netzabschnittstrennstellen des jeweiligen Netzabschnitts Strommesswerte erfasst und dann an eine zentrale Überwachungseinheit weitergeleitet bzw. übertragen. Für den jeweiligen Netzabschnitt wird dann in der zentralen Überwachungseinheit ein Summenwert der erfassten Strommesswerte für jene Ströme, welche in den jeweiligen Netzabschnitt hineinfließen, gebildet und dieser Summenwert dann mit einem Strombelastungsgrenzwert für den jeweiligen Netzabschnitt verglichen. In Abhängigkeit vom jeweiligen Vergleichsabschnitt für den jeweiligen Netzabschnitt werden dann Steuerbefehle von der zentralen Übertragungseinheit an die Netzteilnehmer, insbesondere die im Netzabschnitt angeschlossenen Energieerzeugungsvorrichtungen, gegebenenfalls an Energiespeichereinheiten (z.B. Batterien von Elektroautos, etc.) und/oder an Netzlaststeuerungsvorrichtungen, gesendet.

Der Hauptaspekt der erfindungsgemäß vorgeschlagenen Lösung besteht vor allem darin, dass nur ein Erfassen von Stromwerten an dezentralen Stromeinspeisestellen - also an Punkten, an welchen eine Energieerzeugungsvorrichtung angeschlossen ist - und an Netzabschnittstrennstellen eines Netzabschnitts notwendig ist. D.h. für diese Stromwerterfassung bedarf es nur an diesen Punkten einer Installation von Vorrichtungen zum Erfassen von Strommesswerten bzw. von entsprechenden Messsensoren. Eines besteht beim erfindungsgemäßen Verfahren keine Notwendigkeit Strommesswerte an allen oder einer Vielzahl von Netzteilnehmeranschlüssen zu erfassen und auszuwerten. Weiterhin ist für das erfindungsgemäße Verfahren keine detaillierte und exakte Kenntnis der Topologie des Energieverteilungsnetzes bzw. der jeweiligen Netzabschnitte notwendig. Das erfindungsgemäße Verfahren kann ohne großen Installationsaufwand und ohne Auswertung großer Datenmengen sehr einfach bei bestehenden Energieverteilungsnetzen eingeführt und durchgeführt werden. Durch die zentrale Überwachungseinheit kann eine zentral koordinierte und flexible Steuerung der Strombelastung in den einzelnen Netzabschnitten des Energieverteilungsnetzes vorgenommen und durchgeführt werden. Durch z.B. ein wiederholtes Aussenden von Steuerbefehlen durch die zentrale Überwachungseinheit kann eine Energieerzeugung und/oder eine Strombelastung in den Netzabschnitten des Energieverteilungsnetzes sehr einfach stufenweise angepasst und geregelt werden.

Es ist weiterhin vorteilhaft, wenn bei einem Überschreiten des Strombelastungsgrenzwertes eines Netzabschnitts Steuerbefehle zum Reduzieren einer Stromerzeugung/-einspeisung und/oder einer Netzlast an die jeweiligen Netzteilnehmer - wie z.B. Energieerzeugungsvorrichtungen, Energiespeichereinheiten und/oder Netzlaststeuerungsvorrichtungen - dieses jeweiligen Netzabschnitts gesendet werden. Damit wird auf einfache Weise eine Strombelastung innerhalb eines Netzabschnitts rasch reduziert und eine dauerhafte Belastung dieses Netzabschnitts und gegebenenfalls damit verbundene Folgeschäden verhindert.

Es ist ebenfalls günstig, wenn bei einem Unterschreiten des Strombelastungsgrenzwertes in einem Netzabschnitt des Energieversorgungsnetzes von der zentralen Überwachungseinheit Steuerbefehle an die jeweiligen Netzteilnehmer (z.B. Energieerzeugungsvorrichtungen, Energiespeichereinheiten, Netzlaststeuerungsvorrichtungen, etc.) dieses Netzabschnitts ausgesendet werden, in welchen eine Erlaubnis zum Erhöhen der Stromerzeugung und/oder Netzlast bzw. des Verbrauchs von elektrischer Energie erteilt wird. Damit kann auf einfache Weise eine Energieerzeugung bzw. ein Energieverbrauch und damit eine Strombelastung in den einzelnen Netzabschnitten des Energieverteilungsnetzes gesteigert bzw. gesteuert werden. Die Energieerzeugung bzw. die Netzlast wird damit sehr effizient an die jeweilige Strombelastungsgrenze eines Netzabschnitts zentral koordiniert angepasst.

In weiterer Ausgestaltung des erfindungsgemäßen Verfahrens ist vorgesehen, dass die erfassten Stromwerte von den Vorrichtungen zum Erfassen von Strommesswerten sowie die Steuerbefehle von der zentralen Überwachungseinheit zumindest mittels einer unidirektionalen Datenübertragung übermittelt werden. Unter einer unidirektionalen Datenübertragung wird üblicherweise eine Datenübertragung verstanden, bei welcher von einem Kommunikationsteilnehmer wie z.B. einer Vorrichtung zum Erfassen von Strommesswerten, der zentrale Überwachungseinheit, etc. nur Daten ausgesendet werden, ohne vom empfangenden Kommunikationsteilnehmer eine Information über einen korrekten Empfang der Daten zu erhalten. Damit können Daten rasch und effizient zwischen den Kommunikationsteilnehmer - z.B. Strommesswerte von den Vorrichtungen zum Erfassen von Strommesswerten zur zentralen Überwachungseinheit - weitergeleitet und verarbeitet werden. Es kann damit dann sehr rasch, z.B. auf ein Überschreiten eines Strombelastungsgrenzwertes in einem Netzabschnitt reagiert werden.

Idealer Weise wird für die Übertragung der erfassten Strommesswerte bzw. für die Übertragung der Steuerbefehle auch das Energieverteilungsnetz als Kommunikationsmedium genutzt. Damit ist es z.B. nicht notwendig, eine zusätzliche und teure Kommunikationsinfrastruktur zwischen den Vorrichtungen zum Erfassen von Strommesswerten, der zentralen Überwachungseinheit und den Netzteilnehmern, insbesondere den Energieerzeugungsvorrichtungen, etc. aufzubauen. Es ist aber auch möglich beispielweise Funkkommunikation für die Daten- und/oder Steuerbefehlsübertragung zu nutzen bzw. eine Kombination von Funkkommunikation und Energieverteilungsnetz als Kommunikationsmedium zu verwenden. Weiterhin ist es möglich, dass z.B. eine Vorrichtung zum Erfassen von Strommesswerten, welche sehr nahe bei einer Zentrale (z.B. Ortsnetztransformator, etc.) bzw. sehr nahe bei der zentralen Überwachungsstation angebracht ist, mit dieser direkt beispielsweise über eine Kabelverbindung verbunden ist.

Bevorzugter weise wird ein Empfang von Steuerbefehlen, welche von der zentralen Überwachungseinheit ausgesendet werden, in den jeweiligen Energieerzeugungsvorrichtungen und/oder in den Netzlaststeuerungsvorrichtungen überwacht. Dabei kann beispielsweise eine Empfangsqualität der Steuerbefehle oder ein Ausbleiben von Steuerbefehlen innerhalb einer vorgegebenen Beobachtungszeitspanne überwacht werden. Bleiben innerhalb dieser Beobachtungszeitspanne die Steuerbefehle aus oder ist die Empfangsqualität der Steuerbefehle stark bzw. unzulässig vermindert, so werden die entsprechenden, betroffenen Netzteilnehmer, insbesondere Energieerzeugungsvorrichtungen, Energiespeichereinheiten, Netzlaststeuerungsvorrichtungen, etc., in einen sicheren Betriebsmodus übergeführt. Es wird mit Hilfe der Überwachung eines Empfangs/einer Empfangsqualität der Steuerbefehle sehr einfach eine unkontrollierte Erzeugung von elektrischer Energie bzw. eine unkontrollierte Netzlast in einem Netzabschnitt des Energieverteilungsnetzes verhindert. Durch den sicheren Betriebsmodus wird z.B. einen Energieerzeugung und/oder eine Netzlast so stark beschränkt bzw. auf ein Minimum reduziert, dass es zu keiner übermäßigen Strombelastung des betroffenen Netzabschnitts kommen kann.

Weiterhin wird die Aufgabe mit einem System zur Durchführung des erfindungsgemäßen Verfahrens gelöst. Dieses System besteht zumindest aus zumindest drei Vorrichtungen zum Erfassen von Strommesswerten pro Netzabschnitt, durch welche an mindestens einer dezentralen Stromeinspeisestelle und an mindestens zwei Netzabschnittstrennstellen des jeweiligen Netzabschnitts Strommessungen vornehmbar sind. Weiterhin umfasst das erfindungsgemäße System eine zentrale Überwachungseinheit zum Empfangen und Auswerten von erfassten Strommesswerten und zum Aussenden von Steuerbefehlen an die Netzteilnehmer in den jeweiligen Netzabschnitten für eine Steuerung einer Strom- bzw. Energieerzeugung/-einspeisung und/oder Netzlast in den jeweiligen Netzabschnitten des Energieverteilungsnetzes.

Die Vorteile des erfindungsgemäßen Systems liegen vor allem darin, dass nur an wenigen Punkten eines Netzabschnitts eines Energieverteilungsnetzes - zumindest an einer dezentralen Stromeinspeisestelle und zumindest an einer Netzabschnittstrennstelle - Stromwerte erfasst werden müssen. Das bedeutet, dass nur zumindest an diesen Punkten Vorrichtungen zum Erfassen von Stromwerten bzw. entsprechende Messsensoren in den zu überwachenden Netzabschnitten des Energieverteilungsnetzes für das erfindungsgemäßen System vorgesehen sein müssen. Es besteht daher keine Notwendigkeit einer aufwendigen und kostenintensiven Messung von Strommesswerten an allen oder zumindest einer Vielzahl von Netzteilnehmeranschlüssen, welche beispielsweise mit einer Installation einer Vielzahl an Messsensoren und einer genauen Kenntnis der Topologie des Energieverteilungsnetzes und der jeweiligen Netzabschnitte verbunden wäre. Das erfindungsgemäße System kann auf sehr einfache Weise und ohne großen Aufwand in einem bestehenden Energieverteilungsnetz angebracht werden und durch das erfindungsgemäße System wird mittels der zentralen Überwachungseinheit sehr einfach eine Strombelastung in den einzelnen Netzabschnitten zentral überwacht, koordiniert und flexibel gesteuert. Durch z.B. ein wiederholtes Aussenden von Steuerbefehlen durch die zentrale Überwachungseinheit sind dabei eine Energieerzeugung und/oder eine Strombelastung in den entsprechenden Netzabschnitten des Energieverteilungsnetzes sehr einfach stufenweise anpassbar.

Bei einer bevorzugten Fortbildung des erfindungsgemäßen Systems weisen die Vorrichtungen zum Erfassen von Strommesswerten, von welchen zumindest drei in einem Netzabschnitt mit zumindest einer Energieversorgungsvorrichtung angebracht sind, jeweils eine Kommunikationsvorrichtung auf, welche für zumindest für eine unidirektionale Übertragung von erfassten Stromwerten zur zentralen Überwachungseinheit einsetzbar ist. Über diese Kommunikationsvorrichtung werden auf sehr einfache Weise die in der jeweiligen Vorrichtung zum Erfassen von Strommesswerten gemessenen Strommesswert weitergeleitet, damit diese von der zentralen Überwachungseinheit gesammelt und dann je Netzabschnitt entsprechend ausgewertet werden können. Durch die zumindest unidirektionale Datenübertragung ist eine schnelle Übertragung der gemessenen Strommesswerte möglich und es kann damit rasch z.B. auf Änderungen in der Strombelastung in einem Netzabschnitt reagiert werden.

Vorzugsweise umfasst die zentrale Überwachungseinheit des erfindungsgemäßen Systems eine Steuerungsschnittstelle, welche mit einer Kommunikationsvorrichtung verbunden ist. Über diese Steuerungsschnittstelle und die angebundene Kommunikationsvorrichtung sind die erfassten Strommesswerte der Vorrichtungen zum Erfassen von Strommesswerten empfangbar. Weiterhin ist über die Steuerungsschnittstelle und die angebundene Kommunikationsvorrichtung eine Kommunikationsverbindung aufbaubar und es können damit von der zentralen Überwachungseinheit auf sehr einfache und rasche Weise Steuerbefehle mittels zumindest einer unidirektionalen Übertragung an die Netzteilnehmer, insbesondere an Energieerzeugungsvorrichtungen, Energiespeichereinheiten und/oder Vorrichtungen zur Netzlaststeuerung, übermittelt werden. Über die Steuerungsschnittstelle und die angebundene Kommunikationsvorrichtung werden damit beispielsweise die Energieerzeugungsvorrichtungen, Energiespeichereinheiten und/oder Vorrichtungen zur Netzlaststeuerung angesteuert, um eine Energieerzeugung bzw. einen Energieverbrauch im Energieverteilungsnetz entsprechend zu regeln - d.h. zu reduzieren, wenn die Strombelastung zu hoch ist, oder eine Steigerung zuzulassen, wenn von der Strombelastung die vorgegebenen Grenzwerte noch entsprechend unterschritten werden.

Zweckmäßigerweise ist für die Kommunikationsvorrichtungen der Vorrichtungen zum Erfassen von Strommesswerten und für die Steuerungsschnittstelle und die Kommunikationsvorrichtung der zentralen Überwachungseinheit das Energieverteilungsnetz auch als Kommunikationsmedium nutzbar. Damit bedarf es keiner zusätzliche und teure Kommunikationsinfrastruktur zwischen den Vorrichtungen zum Erfassen von Strommesswerten, der zentralen Überwachungseinheit und den Netzteilnehmern, insbesondere den Energieerzeugungsvorrichtungen, etc. Alternativ ist es aber auch möglich beispielweise Funkkommunikation für die Daten- und/oder Steuerbefehlsübertragung zu nutzen bzw. eine Kombination von Funkkommunikation und Energieverteilungsnetz als Kommunikationsmedium zu einzusetzen. Weiterhin besteht die Möglichkeit, dass beispielsweise die Kommunikationsvorrichtung einer Vorrichtung zum Erfassen von Strommesswerten, welche sehr nahe bei der zentralen Überwachungseinheit - z.B. in der Nähe oder bei der Zentrale des Energieverteilungsnetzes (z.B. Ortnetztransformator, etc.) - angebracht ist, direkt z.B. mittels Kabelverbindung, etc. mit der zentralen Überwachungseinheit bzw. mit deren Kommunikationsvorrichtung verbunden ist.

### Kurzbeschreibung der Zeichnung

Die Erfindung wird nachfolgend in beispielhafter Weise anhand der beigefügten Figuren erläutert. Dabei zeigen die Figuren 1a und 1b in beispielhafter und schematischer Weise ein Energieverteilungsnetz ohne dezentrale Energieeinspeisung sowie eine zugehörige Strombilanz bei Verwendung des erfindungsgemäßen Verfahrens zum Überwachen und Steuern einer Stromverteilung sowie den zugehörigen Systems. Die Figuren 2a und 2b sowie 3a und 3b zeigen ebenfalls in schematischer Weise eine Überwachung und Steuerung des beispielhaften Energieverteilungsnetzes durch das erfindungsgemäße Verfahren wie das zugehörige System zur Durchführung dieses Verfahrens bei beispielhaften dezentralen Energieeinspeisungen mit der jeweils zugehörigen Strombilanz in einem beispielhaften Netzabschnitt.

### Ausführung der Erfindung

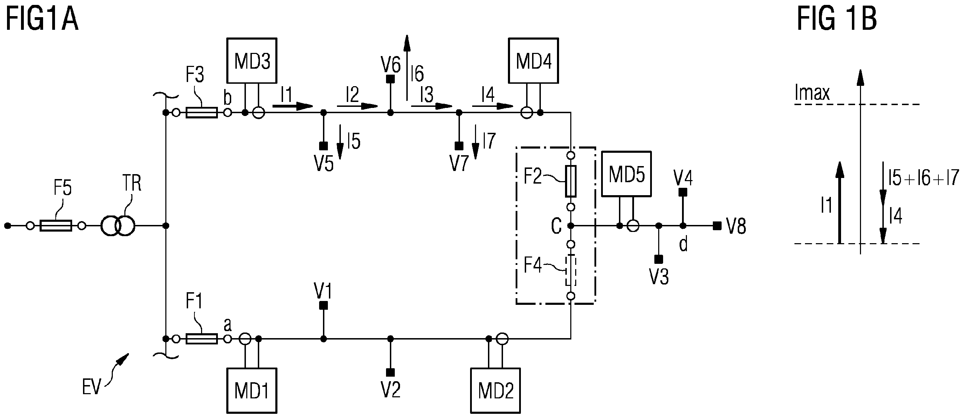

Figur 1a zeigt beispielhaft und schematisch ein Energieverteilungsnetz EV ohne dezentrale Energieeinspeisung. Dieses Energieverteilungsnetz EV besteht aus einem Ortsnetztransformator TR mit einer mittelnetzspannungsseitigen Trafosicherung F5 sowie einer Sammelschiene mit Abzweigsicherungen F1 und F3. Weiterhin weist das Energieverteilungsnetz EV beispielhafte Netzabschnitte ac, bc, cd (oder Verteilnetzstränge) auf, an welche einzelnen Netzteilnehmer V1 bis V8 bzw. Verbraucher V1 bis V8 angeschlossen sind. Diese Verbraucher V1 bis V8 sind in Figur 1a als rechteckige Anschlusspunkte für die jeweiligen Netzteilnehmer bzw. Verbraucher V1 bis V8 dargestellt. Dabei sind beispielsweise in einem Netzabschnitt ac mit den Netzabschnittstrennstellen a und c die Verbraucher V1 und V2 angeschlossen. Im Netzabschnitt bc mit den Netztrennstellen b und c sind z.B. drei Verbraucher V5, V6, V7 an das Energieverteilungsnetz EV angebunden.

Bei der beispielhaft und schematisch dargestellten Netztopologie des beispielhaften Energieverteilungsnetzes EV ist der Netzabschnitt cd mittels einer Kurzschlussbrücke F2 bzw. mit der Sicherung F2 mit dem Netzabschnitt bc verbunden. Weiterhin kann - wie mittels der strichliert dargestellten Kurzschlussbrücke F4 bzw. Sicherung F4 der Netzabschnitt cd auch mit dem Netzabschnitt ac verbunden sein. Statt als Kurzschlussbrücke F4 bzw. Sicherung F4 kann diese Stelle auch als Trennstelle F4 ausgeführt sein, wodurch zwischen den Netzabschnitten cd und ac keine Verbindung besteht.

Im Netzabschnitt cd sind weitere Verbraucher V3, V4, V8 an das Energieverteilungsnetz EV angebunden. In den jeweiligen Netzabschnitten ac, bc, cd sind weiterhin Vorrichtungen MD1 bis MD5 vorgesehen, welche einer Strommesswerterfassung in den jeweiligen Netzabschnitten ac, bc, cd dienen. Die Vorrichtungen MD1 bis MD5 zum Erfassen von Strommesswerten in den jeweiligen Netzabschnitten ac, bc, cd sind dabei z.B. in Nähe bzw. bei den jeweiligen Netzabschnittstrennpunkten a, b, c und d angebracht.

Eine Versorgung der Netzteilnehmer V1 bis V8 bzw. der Verbraucher V1 bis V8 in den einzelnen Netzabschnitten ac, bc, cd - wie z.B. der Verbraucher V5, V6 und V7 im Netzabschnitt bc - erfolgt zentral vom Ortsnetztransformator TR aus. Das bedeutet, dass z.B. im Netzabschnitt bc alle Ströme I1 bis 14 von der Netzabschnittstrennstelle b zur Netzabschnittstrennstelle c fließen bzw. die Ströme 15, 16 und 17 zu den jeweiligen Verbrauchern V5, V6, V7.

Eine entsprechende Strombilanz des Netzabschnitts bc ist beispielhaft in Figur 1b dargestellt. Aus dieser ist ersichtlich, dass der in den Netzabschnitt bc einfließende Strom I1 im Betrag gleich einem Betrag der Summe aus den aus dem Netzabschnitt bc hinausfließenden Strömen 14, 15, 16 und 17 ist. Bei einer entsprechend günstigen Netzlastsituation im betrachteten Netzabschnitt bc wird vom Strom I1, welcher in den Netzabschnitt bc hineinfließt, ein Strombelastungsgrenzwert Imax für den Netzabschnitt bc nicht überschritten.

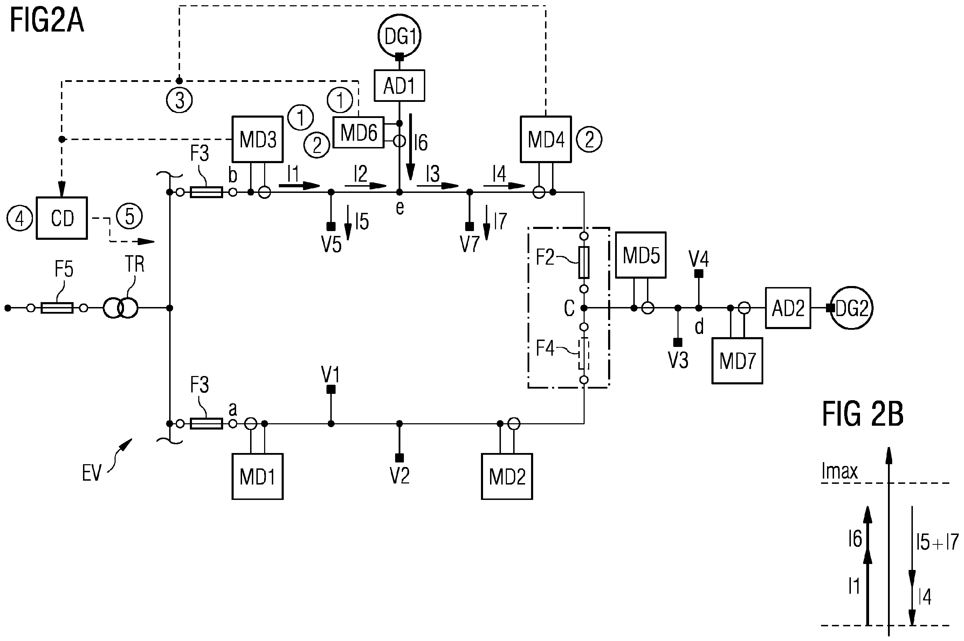

Figur 2a zeigt wieder in schematischer Weise das beispielhafte Energieverteilungsnetz EV, welches nun in den Netzabschnitten bc, cd eine dezentrale Energieeinspeisung aufweist, und in welchem daher das erfindungsgemäße System zur Überwachung und Steuerung einer Stromverteilung bzw. das erfindungsgemäße Verfahren zum Überwachen und Steuern der Stromverteilung zum Einsatz kommt. Im beispielhaften Energieverteilungssystem EV ist nun im Netzabschnitt bc anstatt des Verbrauchers V6 eine Energieerzeugungsvorrichtung DG1 (z.B. Photovoltaikanlage, etc.) mit zugehöriger Steuereinheit AD1 angebracht. Bei einer entsprechenden dezentralen Stromeinspeisestelle e des Netzabschnitts bc ist weiterhin eine Vorrichtung MD6 zum Erfassen von Strommesswerten angebracht. Damit sind im Netzabschnitt bc zumindest drei Vorrichtungen MD3, MD4, MD6 zum Erfassen von Strommesswerten vorgesehen, wobei entsprechend dem erfindungsgemäßen System der Netzabschnitt bc nun zumindest drei Vorrichtungen MD3, MD4 und MD6 zum Erfassen von Strommesswerten zum Messen von Strommesswerten I1, 14, 16 an mindestens einer dezentralen Stromeinspeisestelle e und an mindestens zwei Netzabschnittstrennstellen b, c des Netzabschnitts bc aufweist.

Weiterhin weist das Energieverteilungsnetz EV auch im Netzabschnitt cd eine zweite Energieerzeugungsvorrichtung DG2 mit zugehöriger Steuereinheit AD2 auf, durch welche bei der Netzabschnittstrennstelle d Strom bzw. Energie in den Netzabschnitt cd eingespeist wird. Der Netzabschnittstrennpunkt d wird damit zur dezentralen Stromeinspeisestelle d, bei welchem eine Vorrichtung MD7 zum Erfassen von Strommesswerten angebracht ist.

Weiterhin ist im beispielhaft dargestellten Energieversorgungsnetz EV eine zum erfindungsgemäßen System gehörende zentrale Überwachungseinheit CD vorgesehen. Diese zentrale Überwachungseinheit CD weist eine Steuerschnittstelle auf, über welche eine Kommunikationseinrichtung angebunden sein kann. Damit kann die zentrale Überwachungseinheit CD einerseits über die Steuerschnittstelle und die zugehörige Kommunikationseinrichtung von den Vorrichtungen MD1 bis MD7 zum Erfassen von Strommesswerten gemessene Strommesswerte empfangen. Andererseits werden von der zentralen Überwachungseinheit CD über die Steuerschnittstelle und die zugehörige Kommunikationseinrichtung zumindest mittels unidirektionaler Übertragung Steuerbefehle an die Netzteilnehmer V1 bis V5, V7, DG1, DG2 ausgesendet. Insbesondere werden diese Steuerbefehle dann in den jeweiligen Steuereinheiten AD1, AD2 der Energieerzeugungsvorrichtungen DG1, DG2 verarbeitet, um z.B. eine Stromerzeugung zu reduzieren oder zu erhöhen, bzw. von Netzlaststeuerungsvorrichtungen im Energieverteilungsnetz EV empfangen und ausgewertet, um eine Netzlast entsprechend im jeweiligen Netzabschnitt ac, bc, cd zu regeln.

Weiterhin weisen auch die Vorrichtungen MD1 bis MD7 jeweils einen Kommunikationseinrichtung auf. Mit dieser Kommunikationseinrichtung werden die von der jeweiligen Vorrichtung MD1 bis MD7 erfassten Strommesswerte über zumindest eine unidirektionale Übertragung an die zentrale Überwachungseinheit CD gesendet. Als Kommunikationsmedium für die Übertragung der Strommesswerte sowie der Steuerbefehle kann beispielsweise das Energieverteilungsnetz EV selbst genutzt werden. Alternativ kann aber auch ein eigenes Kommunikationssystem wie z.B. Funkkommunikation oder einen Kombination von Funkkommunikation und Energieverteilungsnetz EV für die Übertragung von Strommesswerten und Steuerbefehlen eingesetzt werden. Vorrichtungen MD1 bis MD7, welche nach bei der zentralen Überwachungseinheit CD angebracht sind, können beispielsweise auch direkt an diese für einen Kommunikation angebunden sein.

Im Folgenden wird ein beispielhafter Ablauf des erfindungsgemäßen Verfahrens zum Überwachen und Steuern einer Stromverteilung bei dezentraler Energieeinspeisung anhand des Netzabschnitts bc des Energieversorgungsnetzes EV erläutert. Der Netzabschnitt bc weist dabei die Energieerzeugungsvorrichtung DG1 auf, durch welche über die dezentrale Stromeinspeisestelle e ein Strom 16 bzw. Energie in den Netzabschnitt bc eingespeist wird.

In einem ersten Verfahrensschritt 1 werden im Netzabschnitt bc zumindest drei Vorrichtungen MD3, MD4, MD6 zum Erfassen von Strommesswerten angebracht. Dann werden in einem zweiten Verfahrensschritt 2 Strommesswerte an mindestens einer dezentralen Stromeinspeisestelle e sowie an mindestens zwei Netztrennstellen b, c des Netzabschnitts bc gemessen. Dies sind jene Stellen im Netzabschnitt bc, an welchen potentiell z.B. je nach Energieerzeugung bzw. Netzlast Strom in den Netzabschnitt bc hineinfließen kann. Es werden daher im Netzabschnitt bc beispielsweise ein erster Wert eines ersten Stroms I1 bei einer ersten Netzabschnittstrennstelle b von einer ersten Vorrichtung MD3 zum Erfassen von Strommesswerten, ein zweiter Wert eines zweiten Stroms 14 an einer zweiten Netzabschnittstrennstelle c von einer zweiten Vorrichtung MD4 zum Erfassen von Strommesswerten und ein dritter Wert eines dritten Stroms 16 an der dezentralen Stromeinspeisestelle e von einer dritten Vorrichtungen MD6 zum Erfassen von Strommesswerten erfasst.

In einem dritten Verfahrensschritt 3 werden die erfassten Strommesswerte I1, 14, 16 von den Vorrichtungen MD3, MD4, MD6 zum Erfassen von Strommesswerten - z.B. über die zugehörigen Kommunikationseinrichtungen mittels zumindest unidirektionaler Übertragung - an die zentrale Überwachungseinheit CD übermittelt. Dann werden in einem vierten Verfahrensschritt 4 von der zentralen Überwachungseinheit CD die übermittelten Strommesswerte I1, 14, 16 für den Netzabschnitt bc ausgewertet. Dabei wird ein Summenwert der erfassten Strommesswerte I1, 14, 16 für jene Strommesswerte bzw. für jene Ströme I1, 16 gebildet, welche in den Netzabschnitt bc hineinfließen. Dies sind beim in Figur 2a dargestellten, beispielhaften Verfahrensablauf der erste und der dritte Ströme I1, 16. Der Summenwert aus den in den Netzabschnitt bc einfließenden Strömen I1, 16 bzw. aus ihren Beträgen wird dann von der zentralen Überwachungseinheit CD mit einem für den Netzabschnitt bc zulässigen Strombelastungsgrenzwert Imax verglichen.

In Figur 2b ist eine zum Verfahrensschritt 4 gehörende beispielhafte Strombilanz für den Netzabschnitt bc dargestellt. In dieser sind die in den Netzabschnitt bc einfließenden Ströme I1, 16 den aus dem Netzabschnitt bc hinausfließenden Strömen 14, 15, 17 gegenübergestellt. Weiterhin ist aus Figur 2b ersichtlich, dass obwohl der Betrag des Summenwerts der in den Netzabschnitt bc einfließenden Ströme I1, 16 höher ist als nur der Strom I1, der Strombelastungsgrenzwert Imax für den Netzabschnitt bc nicht bzw. noch nicht erreicht wird.

In einem fünften Verfahrensschritt 5 werden daher dann auf Basis dieses Vergleichsergebnisses, dass der Strombelastungsgrenzwert Imax unterschritten wird, entsprechende Steuerbefehle von der zentralen Überwachungseinheit CD - z.B. über die zugehörige Steuerungsschnittstelle und die angebundene Kommunikationseinrichtung - mittels zumindest unidirektionaler Übertragung z.B. über das Energieverteilungsnetz EV und/oder Funkkommunikation an die Netzteilnehmer V5, V7, DG1 des Netzabschnitts bc ausgesendet. Als Steuerbefehl kann beispielsweise der Energieerzeugungsvorrichtung DG1 des Netzabschnitts bc bzw. der zugehörigen Steuereinheit AD1 eine Erlaubnis zur Steigerung der Energieerzeugung/-einspeisung gesendet werden. Es kann auch weiteren Netzteilnehmer V5, V7 wie z.B. Energiespeichereinheit oder einer Netzlaststeuerungsvorrichtung mittels eines Steuerbefehls mitgeteilt werden, dass eine Erhöhung der Netzlast im Netzabschnitt bc möglich ist.

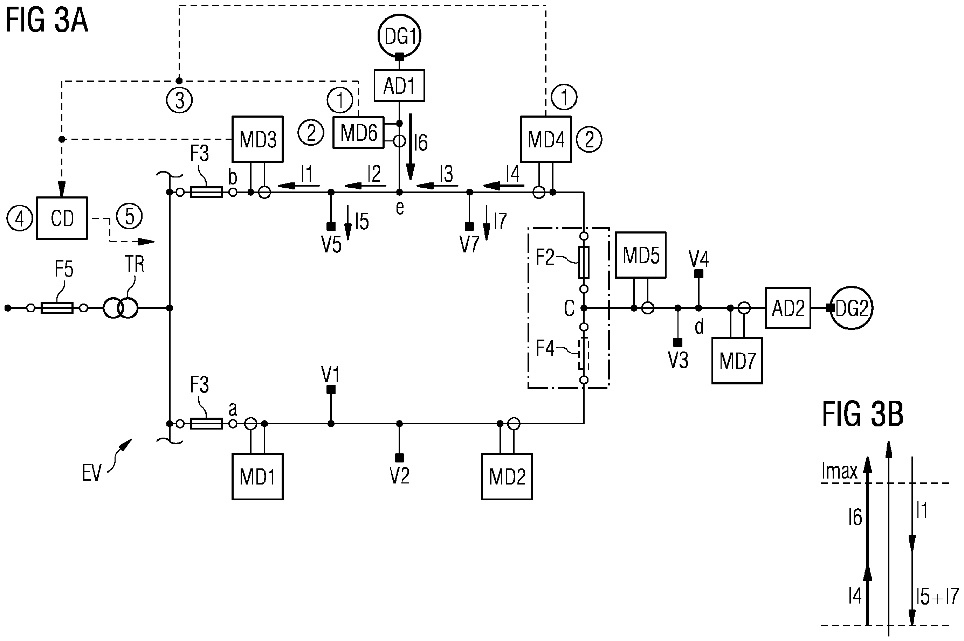

In Figur 3a ist wiederum das beispielhafte Energieverteilungsnetz EV mit dezentraler Energieeinspeisung in den Netzabschnitten bc, cd schematisch dargestellt, wobei ebenfalls das erfindungsgemäße System zum Überwachen und Steuern einer Stromverteilung zum Einsatz kommt. Allerdings besteht nun im Energieverteilungsnetz EV eine andere Stromflusskonstellation, wobei wieder der beispielhafte Netzabschnitt bc betrachtet wird. Beispielsweise wird nun im Netzabschnitt cd von der zweiten Energieerzeugungsvorrichtung DG2 mehr Strom bzw. Energie in diesen Netzabschnitt cd eingespeist, als in diesem Netzabschnitt cd verbraucht wird. Daher fließt der zweite Strom 14 des Netzabschnitts bc vom Netzabschnitt cd über die Netzabschnittstrennstelle c in den Netzabschnitt bc. Wird auch im Netzabschnitt bc nicht der gesamte verfügbare Strom bzw. die gesamte verfügbare Energie benötigt oder verbraucht, so fließt der erste Strom I1 des Netzabschnitts bc in Richtung der Sammelschiene bzw. des Ortsnetztransformator TR.

Gemäß dem ersten Verfahrensschritt 1 sind wieder im Netzabschnitt bc zumindest drei Vorrichtungen MD3, MD4, MD6 zum Erfassen von Strommesswerten angebracht. Im zweiten Verfahrensschritt 2 werden ebenfalls die Strommesswerte an mindestens einer dezentralen Stromeinspeisestelle e sowie an mindestens zwei Netztrennstellen b, c des Netzabschnitts bc gemessen, also an jene Stellen im Netzabschnitt bc, an welchen potentiell z.B. je nach Energieerzeugung bzw. Netzlast Strom in den Netzabschnitt bc hineinfließen kann. Das bedeutet, es werden im zweiten Verfahrensschritt 2 die Werte der Ströme I1, 14, 16 von den entsprechenden Vorrichtungen MD3, MD4, MD6 zum Erfassen von Strommesswerten erfasst. Die erfassten Strommesswerte I1, 14, 16 werden dann im dritten Verfahrensschritt 3 an die zentrale Überwachungseinheit CD übertragen und von dieser im vierten Verfahrensschritt 4 für den Netzabschnitt bc ausgewertet bzw. ein Summenwert für die nun in den Netzabschnitt bc einfließenden Ströme 14, 16 gebildet und mit dem Strombelastungsgrenzwert Imax für den Netzabschnitt bc verglichen.

Durch die Richtungsänderung des ersten und dritten Stroms I1 und 14 im Netzabschnitt bc ergibt sich nun einen in Figur 3b beispielhaft dargestellte, veränderte Strombilanz. Es werden in Figur 3b wieder die in den Netzabschnitt bc einfließenden Ströme 14, 16 den aus den Netzabschnitt bc hinausfließenden Strömen I1, 15, 17 gegenübergestellt. Da nun der erste Strom I1 und dritte Strom 14 des Netzabschnitts bc durch die neue Stromkonstellation die Richtung geändert haben, ist nun der erste Strom I1 ein aus dem Netzabschnitt bc abfließender Strom und wird mit den Strömen 15, 17, welche zu Verbrauchern V5, V7 fließen, summiert. Der dritte Strom 14 fließt nun in den Netzabschnitt bc hinein, genauso wie der zweite Strom 16 von der Energieerzeugungsvorrichtung DG1 des Netzabschnitts bc. Daher werden nun der zweite und dritte Strom 14, 16 aufsummiert. Weiterhin ist auch ersichtlich, dass der Betrag der in den Netzabschnitt bc einfließenden Ströme 14, 16 nun größer ist als der Strombelastungsgrenzwert Imax für den Netzabschnitt bc. Daher könnte z.B. es zu einer Überlastung des Netzabschnitts bc oder zum Auslösen der Abzweigsicherung F3 des Netzabschnitts bc kommen.

Im fünften Verfahrensschritt 5 werden daher entsprechende Steuerbefehle von der zentralen Überwachungseinheit CD an die Netzteilnehmer V5, V7, DG1 des Netzabschnitts bc ausgesendet. Insbesondere wird von der dezentralen Überwachungseinheit CD ein Steuerbefehl zum Reduzieren der Energieerzeugung/- einspeisung an die Energieerzeugungsvorrichtung DG1 bzw. an die zugehörige Steuereinheit AD1 gesendet. Weiterhin kann auch ein Steuerbefehl zum Drosseln der Energieerzeugung/- einspeisung an die zweite Energieerzeugungsvorrichtung DG2 im Netzabschnitt cd bzw. der entsprechend zugehörigen zweiten Steuereinheit AD2 übermittelt werden.

Weiterhin kann sowohl bei der in Figur 2a als auch bei der in Figur 3a beispielhaft dargestellten Stromkonstellation ein Empfang von Steuerbefehlen der zentralen Überwachungseinheit CD in den Energieerzeugungsvorrichtungen DG1, DG2 bzw. in den zugehörigen Steuereinheiten AD1, AD2 und/oder in Netzlaststeuerungsvorrichtungen überwacht werden. Dabei kann beispielsweise eine Empfangsqualität der Steuerbefehle überwacht werden. Alternativ kann auch ein Empfangen bzw. ein Ausbleiben von Steuerbefehlen der zentralen Überwachungseinheit CD innerhalb eines vorgegebenen Beobachtungszeitraums kontrolliert werden. Bei Feststellen einer verminderten oder sehr schlechten Empfangsqualität oder beim Feststellen des Ausbleibens von Steuerbefehlen in einem vorgegebenen Beobachtungszeitraum können dann z.B. die Netzteilnehmer V1 bis V7, DG1, DG2 - vor allem aber die Energieerzeugungsvorrichtungen DG1, DG2 und/oder vorhandene Netzlaststeuerungsvorrichtungen - in einen sicheren Betriebsmodus übergeführt werden. In diesem sicheren Betriebsmodus werden beispielsweise die Energieerzeugung und/oder die Netzlast stark reduziert oder auf ein Minimum beschränkt.

## Patentansprüche

1. Verfahren zum Überwachen und Steuern einer Stromverteilung bei dezentraler Energieeinspeisung in einem Energieverteilungsnetz (EV) mit Energieerzeugungsvorrichtungen (DG1, DG2) und Verbrauchern (V1 bis V7) als Netzteilnehmer (V1 bis V8, DG1, DG2), wobei das Energieverteilungsnetz (EV) aus mehreren Netzabschnitten (ac, bc, cd) besteht, über welche die Netzteilnehmer (V1 bis V7, DG1, DG2) an das Energieverteilungsnetz (EV) angeschlossen sind, **dadurch gekennzeichnet, dass** in einem Netzabschnitt (ac, bc, cd) mit zumindest einer Energieerzeugungsvorrichtung (DG1, DG2) zumindest drei Vorrichtungen zum Erfassen von Strommesswerten (MD1 bis MD7) installiert werden (1), dass von diesen Vorrichtungen zum Erfassen von Strommesswerten (MD1 bis MD7) Strommesswerte (I1 bis 17) an mindestens einer dezentralen Stromeinspeisestelle (d, e) und an mindestens zwei Netzabschnittstrennstellen (a, b, c) des jeweiligen Netzabschnitts (ac, bc, cd) erfasst werden (2), dass die erfassten Strommesswerte (I1 bis 17) an eine zentrale Überwachungseinheit (CD) übertragen werden (3), dass dann von der zentralen Überwachungseinheit (CD) für den jeweiligen Netzabschnitt (ac, bc, cd) die erfassten Stromwerte (I1 bis 17) ausgewertet werden und ein Summenwert für jene Ströme, welche in den jeweiligen Netzabschnitt einfließen, gebildet wird (4), dass dann der Summenwert der in den jeweiligen Netzabschnitt (ac, bc, cd) einfließenden Ströme mit einem Strombelastungsgrenzwert (Imax) für den jeweiligen Netzabschnitt (ac, bc, cd) verglichen wird (4), und dass dann in Abhängigkeit von einem Vergleichsergebnis Steuerbefehle von der zentralen Überwachungseinheit (CD) an die Netzteilnehmer (V1 bis V7, DG1, DG2) des jeweiligen Netzabschnitts (ac, bc, cd) gesendet werden (5).

2. Verfahren nach Anspruch 1, **dadurch gekennzeichnet, dass** bei einem Überschreiten des Strombelastungsgrenzwertes (Imax) von der zentralen Überwachungseinheit (CD) Steuerbefehle zum Reduzieren einer Stromerzeugung und/oder Netzlast an die jeweiligen Netzteilnehmer (V1 bis V7, DG1, DG2), insbesondere an die Energieerzeugungsvorrichtungen (DG1, DG2) und/oder Netzlaststeuerungsvorrichtungen, im jeweiligen Netzabschnitt (ac, bc, cd) gesendet werden (5).

3. Verfahren nach Anspruch 1, **dadurch gekennzeichnet, dass** bei einem Unterschreiten des Strombelastungsgrenzwertes (Imax) von der zentralen Überwachungseinheit (CD) Steuerbefehle mit einer Erlaubnis zum Erhöhen der Stromerzeugung und/oder der Netzlast an die jeweiligen Netzteilnehmer (V1 bis V7, DG1, DG2), insbesondere an die Energieerzeugungsvorrichtungen (DG1, DG2) und/oder Netzlaststeuerungsvorrichtungen, im jeweiligen Netzabschnitt (ac, bc, cd) gesendet werden (5).

4. Verfahren nach einem der Ansprüche 1 bis 3, **dadurch gekennzeichnet, dass** die erfassten Strommesswerte (I1 bis 17) der Vorrichtungen (MD1 bis MD7) zum Erfassen von Strommesswerten und die Steuerbefehle der zentralen Überwachungseinheit (CD) zumindest mittels unidirektionaler Datenübertragung übermittelt werden (3, 5).

5. Verfahren nach einem der Ansprüche 1 bis 4, **dadurch gekennzeichnet, dass** ein Empfang von Steuerbefehlen in den jeweiligen Energieerzeugungsvorrichtungen (DG1, DG2) und/oder in den Netzlaststeuerungsvorrichtungen überwacht wird (5).

6. Verfahren nach einem der Ansprüche 1 bis 5, **dadurch gekennzeichnet, dass** bei Feststellen einer verminderter Empfangsqualität oder einem Ausbleiben des Empfangs von Steuerbefehlen der zentralen Überwachungsvorrichtung (CD) innerhalb einer vorgegebenen Beobachtungszeitspanne, die Netzteilnehmer (V1 bis V7, DG1, DG2), insbesondere die Energieerzeugungsvorrichtungen (DG1, DG2) und Netzlaststeuerungsvorrichtungen, in einen sicheren Betriebsmodus übergeführt werden (5).

7. Verfahren nach einem der Ansprüche 1 bis 6, **dadurch gekennzeichnet, dass** für eine Übertragung der erfassten Strommesswerte (I1 bis 17) und der Steuerbefehle das Energieverteilungsnetz (EV) als Kommunikationsmedium genutzt wird.

8. System zur Durchführung eines Verfahrens nach einem der vorangegangenen Ansprüche 1 bis 7 zum Überwachen und Steuern einer Stromverteilung bei dezentraler Energieeinspeisung in einem Energieverteilungsnetz (EV) zumindest bestehend aus:
- zumindest drei Vorrichtungen (MD1 bis MD7) zum Erfassen von Strommesswerten pro Netzabschnitt (ac, bc, cd), durch welche an mindestens einer dezentralen Stromeinspeisestelle (d, e) und an mindestens zwei Netzabschnittstrennstellen (a, b, c) des jeweiligen Netzabschnitts (ac, bc, cd) Strommessungen vornehmbar sind,
- und einer zentrale Überwachungseinheit (CD) zum Empfangen und Auswerten erfasster Strommesswerte (I1 bis 17), zum Bilden eines Summenwertes für in den jeweiligen Netzabschnitt einfließenden Ströme und zum Aussenden von Steuerbefehlen an die Netzteilnehmer (V1 bis V7, DG1, DG2) für eine Steuerung einer Stromerzeugung und/oder Netzlast in den jeweiligen Netzabschnitten (ac, bc, cd) des Energieverteilungsnetzes (EV).

9. System nach Anspruch 8, **dadurch gekennzeichnet, dass** die zumindest drei Vorrichtungen zum Erfassen von Strommesswerten pro Netzabschnitt jeweils eine Kommunikationsvorrichtung aufweisen, welche für zumindest eine unidirektionale Übertragung von erfassten Stromwerten zur zentralen Überwachungseinheit einsetzbar ist.

10. System nach einem der Ansprüche 8 bis 9, **dadurch gekennzeichnet, dass** die zentrale Überwachungseinheit (CD) eine Steuerungsschnittstelle aufweist, welche mit einer Kommunikationsvorrichtung verbunden ist, welche für ein Empfangen von erfassten Strommesswerten (I1 bis 17) von den Vorrichtungen (MD1 bis MD7) zum Erfassen von Strommesswerten sowie für ein Versenden von Steuerbefehlen an die Netzteilnehmer (V1 bis V7, DG1, DG2), insbesondere an Energieerzeugungsvorrichtungen (DG1, DG2) und/oder Netzlaststeuerungsvorrichtungen, einsetzbar ist.

11. System nach einem der Ansprüchen 9 bis 10, **dadurch gekennzeichnet, dass** für die Kommunikationsvorrichtungen der Vorrichtungen (MD1 bis MD7) zum Erfassen von Strommesswerten und für die Kommunikationsvorrichtung der zentralen Überwachungseinheit (CD) das Energieverteilungsnetz (EV) als Kommunikationsmedium nutzbar ist.

## Claims

1. Method for monitoring and controlling a current distribution with a decentralized energy feed in an energy distribution network (EV) having energy generation devices (DG1, DG2) and loads (V1 to V7) as network subscribers (V1 to V8, DG1, DG2), wherein the energy distribution network (EV) consists of a number of network segments (ac, bc, cd), by way of which the network subscribers (V1 to V7, DG1, DG2) are connected to the energy distribution network (EV), **characterised in that** at least three devices for recording current measured values (MD1 to MD7) are installed (1) in a network segment (ac, bc, cd) having at least one energy generation device (DG1, DG2), that current measured values (I1 to 17) are recorded (2) by these devices for recording current measured values (MD1 to MD7) at at least one decentralized current feed point (d, e) and at at least two network segment separating points (a, b, c) of the respective network segment (ac, bc, cd), that the recorded current measured values (I1 to 17) are transmitted to a central monitoring unit (CD), that the recorded current values (I1 to 17) are then evaluated by the central monitoring unit (CD) for the respective network segment (ac, bc, cd) and a total value for those currents which flow into the respective network segment is formed (4), that the total value of the currents flowing into the respective network segment (ac, bc, cd) is then compared with a current load limit value (Imax) for the respective network segment (ac, bc, cd), and that control commands from the central monitoring unit (CD) are then sent (5) to the network subscriber (V1 to V7, DG1, DG2) of the respective network segment (ac, bc, cd) as a function of a comparison result.

2. Method according to claim 1, **characterised in that** when the current load limit value (Imax) is exceeded by the central monitoring unit (CD), control commands for reducing a current generation and/or network load are sent (5) to the respective network subscriber (V1 to V7, DG1, DG2), in particular to the energy generation devices (DG1, DG2) and/or network load control devices, in the respective network segment (ac, bc, cd).

3. Method according to claim 1, **characterised in that** when the current load limit value (Imax) is not reached by the central monitoring unit (CD), control commands with a permission to increase the current generation and/or the network load are sent (5) to the respective network subscriber (V1 to V7, DG1, DG2), in particular to the energy generation devices (DG1, DG2) and/or network load control devices, in the respective network segment (ac, bc, cd).

4. Method according to one of claims 1 to 3, **characterised in that** the recorded current measured values (I1 to 17) of the devices (MD1 to MD7) for recording current measured values and the control commands of the central monitoring unit (CD) are transmitted (3, 5) at least by means of unidirectional data transmission.

5. Method according to one of claims 1 to 4, **characterised in that** a receipt of control commands is monitored (5) in the respective energy generation devices (DG1, DG2) and/or in the network load control devices.

6. Method according to one of claims 1 to 5, **characterised in that** when a reduced receive quality is determined or the receipt of control commands of the central monitoring device (CD) within a predetermined observation period is absent, the network subscriber (V1 to V7, DG1, DG2), in particular the energy generation devices (DG1, |DG2) and network load control devices, are transferred into a safe operating mode.

7. Method according to one of claims 1 to 6, **characterised in that** the energy distribution network (EV) is used as a communication medium for transmitting the recorded current measured values (I1 to 17) and the control commands.

8. System for carrying out a method according to one of the preceding claims 1 to 7 for monitoring and controlling a current distribution with the decentralized energy feed in an energy distribution network (EV), at least consisting of:
- at least three devices (MD1 to MD7) for recording current measured values per network segment (ac, bd, cd), by means of which current measurements can be performed at at least one decentralized current feed point (d, e) and at at least two network segment separating points (a, b, c) of the respective network segment (ac, bc, cd),
- and a central monitoring unit (CD) for receiving and evaluating recorded current measured values (I1 to 17), for forming a total value for currents flowing into the respective network segment and for emitting control commands to the network subscriber (V1 to V7, DG1, DG2) to control a current generation and/or network load in the respective network segments (ac, bc, cd) of the energy distribution network (EV).

9. System according to claim 8, **characterised in that** the at least three devices for recording current measured values per network segment each have a communication device, which can be used for at least a unidirectional transmission of recorded current values to the central monitoring unit.

10. System according to one of claims 8 to 9, **characterised in that** the central monitoring unit (CD) has a control interface, which is connected to a communication device, which can be used to receive recorded current measured values (I1 to 17) from the devices (MD1 to MD7) for recording current measured values and to forward control commands to the network subscriber (V1 to V7, DG1, DG2), in particular to energy generation devices (DG1, DG2) and/or network load control devices.

11. System according to one of claims 9 to 10, **characterised in that** the energy distribution network (EV) can be used as a communication medium for the communication devices of the devices (MD1 to MD7) for recording current measured values and for the communication device of the central monitoring unit (CD).

## Revendications

1. Procédé de surveillance et de commande d'une distribution de courant avec alimentation en énergie décentralisée dans un réseau de distribution d'énergie (EV) comprenant des dispositifs générateurs d'énergie (V1 à V7) et des consommateurs (V1 à V7) en tant qu'abonnés du réseau (V1 à V8, DG1, DG2), le réseau de distribution d'énergie (EV) étant constitué de plusieurs segments de réseau (ac, bc, cd) par l'intermédiaire desquels les abonnés du réseau (V1 à V7, DG1, DG2) sont raccordés au réseau de distribution d'énergie (EV), **caractérisé en ce que** dans un segment de réseau (ac, bc, cd) comprenant au moins un dispositif générateur d'énergie (DG1, DG2), au moins trois dispositifs destinés à détecter des valeurs de mesure de courant (MD1 à MD7) sont installés (1), **en ce que** des valeurs de mesure de courant (I1 à 17) sont détectées (2) par ces dispositifs destinés à détecter des valeurs de mesure de courant (MD1 à MD7) à au moins un point décentralisé d'alimentation en courant (d, e) et à au moins deux points de coupure de segment de réseau (a, b, c) du segment de réseau respectif (ac, bc, cd), **en ce que** les valeurs de mesure de courant (I1 à 17) détectées sont transmises (3) à une unité de surveillance centrale (CD), **en ce qu'**ensuite les valeurs de mesure de courant (I1 à 17) détectées sont évaluées par l'unité de surveillance centrale (CD) pour le segment de réseau respectif (ac, bc, cd), et **en ce qu'**ensuite une valeur totalisée pour les courants, lesquels entrent dans le segment de réseau respectif, est formée (4), **en ce qu'**ensuite la valeur totalisée des courants entrant dans le segment de réseau respectif (ac, bc, cd) est comparée (4) à une valeur limite de charge de courant (Imax) pour le segment de réseau respectif (ac, bc, cd), et **en ce qu'**ensuite des instructions de commande sont émises (5) par l'unité de surveillance centrale (CD) aux abonnés du réseau (V1 à V7, DG1, DG2) du segment de réseau respectif (ac, bc, cd) en fonction d'un résultat comparatif.

2. Procédé selon la revendication 1, **caractérisé en ce que** lors d'un dépassement vers le haut de la valeur limite de charge de courant (Imax), des instructions de commande destinées à réduire une production de courant et/ou une charge du réseau sont émises (5) dans le segment de réseau respectif (ac, bc, cd) par l'unité de surveillance centrale (CD) aux abonnés du réseau respectifs (V1 à V7, DG1, DG2), notamment aux dispositifs générateur d'énergie (DG1, DG2) et/ou aux dispositif de commande de charge de réseau.

3. Procédé selon la revendication 1, **caractérisé en ce que** lors d'un dépassement vers le bas de la valeur limite de charge de courant (Imax), des instructions de commande comprenant une autorisation d'augmenter la production de courant et/ou la charge du réseau sont émises (5) dans le segment de réseau respectif (ac, bc, cd) par l'unité de surveillance centrale (CD) aux abonnés du réseau respectifs (V1 à V7, DG1, DG2), notamment aux dispositifs générateur d'énergie (DG1, DG2) et/ou aux dispositif de commande de charge de réseau.

4. Procédé selon l'une quelconque des revendications 1 à 3, **caractérisé en ce que** les valeurs de mesure de courant détectées (I1 à 17) des dispositifs (MD1 à MD7) destinés à détecter des valeurs de mesure de courant et les instructions de commande de l'unité de surveillance centrale (CD) sont transmises (3, 5) au moins au moyen de transmission de données unidirectionnelle.

5. Procédé selon l'une quelconque des revendications 1 à 4, **caractérisé en ce qu'**une réception d'instructions de commande dans les dispositifs générateurs d'énergie respectifs (DG1, DDG2) et/ou dans les dispositifs de commande de charge de réseau est surveillée (5).

6. Procédé selon l'une quelconque des revendications 1 à 5, **caractérisé en ce que** lors de la constatation d'une qualité de réception moindre ou de l'absence de la réception d'instructions de commande du dispositif de surveillance central (CD) pendant une période de temps d'observation prédéfinie, les abonnés du réseau (V1 à V7, DG1, DG2), notamment les dispositifs générateurs d'énergie (DG1, DG2) et les dispositifs de commande de charge de réseau, passent (5) dans un mode de fonctionnement sûr.

7. Procédé selon l'une quelconque des revendications 1 à 6, **caractérisé en ce que** pour une transmission des valeurs de mesure de courant (I1 à 17) détectées et des instructions de commande, le réseau de distribution d'énergie (EV) est utilisé comme moyen de communication.

8. Système destiné à la réalisation d'un procédé selon l'une quelconque des revendications précédentes 1 à 7, destiné à la surveillance et à la commande d'une distribution de courant avec alimentation en énergie décentralisée dans un réseau de distribution d'énergie (EV) constitué au moins d' :
- au moins trois dispositifs (MD1 à MD7) destinés à détecter des valeurs de mesure de courant par segment de réseau (ac, bc, cd), au moyen desquels des mesures de courant peuvent être effectuées à au moins un point décentralisé d'alimentation en courant (d, e) et à au moins deux points de coupure du réseau (a, b, c) du segment de réseau respectif (ac, bc, cd),
- et d'une unité de surveillance centrale (CD) destinée à recevoir et évaluer des valeurs de mesure de courant détectées (I1 à 17), à former une valeur totalisée pour des courants entrant dans le segment de réseau respectif et à émettre des instructions de commande aux abonnés du réseau (V1 à V7, DG 1, DG2) pour une commande d'une production de courant et/ou d'une charge de réseau dans les segments de réseau respectifs (ac, bc, cd) du réseau de distribution d'énergie (EV).

9. Système selon la revendication 8, **caractérisé en ce que** les au moins trois dispositifs destinés à détecter des valeurs de mesure de courant par segment de réseau présentent respectivement un dispositif de communication, lequel peut être utilisé pour au moins une transmission unidirectionnelle à l'unité de surveillance centrale de valeurs de courant détectées.

10. Système selon l'une quelconque des revendications 8 à 9, **caractérisé en ce que** l'unité de surveillance centrale (CD) présente une interface de commande, laquelle est reliée à un dispositif de communication qui peut être utilisé pour une réception de valeurs de mesure de courant (I1 à 17) détectées par les dispositifs (MD1 à MD7) destinés à détecter des valeurs de mesure de courant ainsi que pour une émission d'instructions de commande aux abonnés du réseau (V1 à V7, DG1, DG2), notamment aux dispositifs générateurs d'énergie (DG1, DG2) et/ou aux dispositifs de commande de charge du réseau.

11. Système selon l'une quelconque des revendications 9 à 10, **caractérisé en ce que** pour les dispositifs de communication des dispositifs (MD1 à MD7) destinés à détecter des valeurs de mesure de courant et pour le dispositif de communication de l'unité de surveillance centrale (CD), le réseau de distribution d'énergie (EV) est exploitable comme moyen de communication.
